(19) Europäisches Patentamt
European Patent Office
Office européen des brevets

(11) Veröffentlichungsnummer: **0 286 965 B1**

(12) **EUROPÄISCHE PATENTSCHRIFT**

(45) Veröffentlichungstag der Patentschrift: **27.05.92**

(51) Int. Cl.[5]: **C08L 69/00**, C08L 51/04, C08L 25/08, C08K 5/02, C08L 27/18, C08K 5/51, C08L 71/02

(21) Anmeldenummer: **88105497.7**

(22) Anmeldetag: **07.04.88**

Die Akte enthält technische Angaben, die nach dem Eingang der Anmeldung eingereicht wurden und die nicht in dieser Patentschrift enthalten sind.

# (54) Flammwidrige, antistatische Polycarbonatformmassen.

(30) Priorität: **17.04.87 DE 3713164**
**17.04.87 DE 3713157**
**15.08.87 DE 3727251**

(43) Veröffentlichungstag der Anmeldung:
**19.10.88 Patentblatt 88/42**

(45) Bekanntmachung des Hinweises auf die Patenterteilung:
**27.05.92 Patentblatt 92/22**

(84) Benannte Vertragsstaaten:
**DE ES FR GB IT NL**

(56) Entgegenhaltungen:
**EP-A- 61 692**
**EP-A- 0 174 493**
**EP-A- 0 207 369**

**PATENT ABSTRACTS OF JAPAN Band 10, Nr. 239 (C-367)(2295) 19. August 1986; & JP-A-61 72053 (TEIJIN CHEM. LTD) 14-04-1986**

(73) Patentinhaber: **BAYER AG**

**W-5090 Leverkusen 1 Bayerwerk(DE)**

(72) Erfinder: **Buysch, Hans-Josef, Dr.**
**Brandenburger Strasse 28**
**W-4150 Krefeld(DE)**
Erfinder: **Schön, Norbert, Dr.**
**Wilhelmshofallee 82**
**W-4150 Krefeld(DE)**
Erfinder: **Kress, Hans-Jürgen, Dr. c/o Mobay Corporation**
**Plastics and Rubber Div. Building 8 Mobay Road**
**Pittsbugh PA 15205(US)**
Erfinder: **Eichenauer, Herbert, Dr.**
**Goethestrasse 71**
**W-4047 Dormagen 1(DE)**
Erfinder: **Buekers, Josef**
**Kneinstrasse 58a**
**W-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

PATENT ABSTRACTS OF JAPAN Band 8, Nr. 266 (C-255)(1703) 6. Dezember 1984; & JP-A-59 142 243 (TORAY K.K.) 15-08-1984

PATENT ABSTRACTS OF JAPAN Band 10, Nr. 49 (C-330)(2106) 26. Februar 1986; & JP-A-60 195 151 (TORAY K.K.) 18-10-1985

## Beschreibung

Gegenstand der vorliegenden Erfindung sind flammwidrige, antistatische Formmassen, enthaltend

A.

20 bis 90 Gew.-Teile eines thermoplastischen aromatischen Polycarbonats auf Basis der Diphenole der Formel (II)

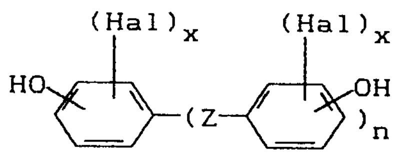

(II),

worin Z eine Einfachbindung, ein $C_1$-$C_5$-Alkylenrest, ein $C_2$20 bis 90 Gew.-Teile eines thermoplastischen aromatischen Polycarbonats auf Basis der Diphenole der Formel (II)

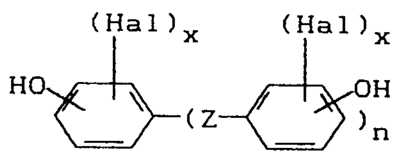

(II),

worin Z eine Einfachbindung, ein $C_1$-$C_5$-$C_5$-Alkylidenrest, ein $C_5$-$C_6$-Cycloalkylidenrest, -S-oder -$SO_2$-, Hal, Chlor oder Brom, x 0, 1 oder 2 und n 1 oder 0 sind, und gegebenenfalls der Formel (IIa)

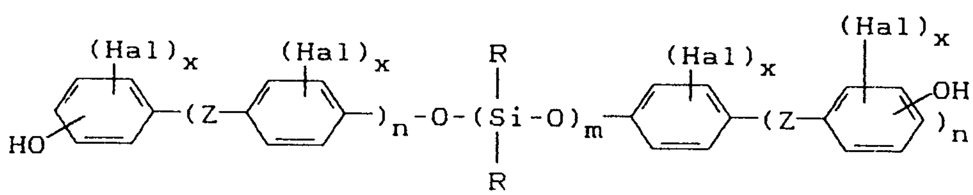

(IIa)

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl bedeuten und m eine ganze Zahl von 5 bis 100 ist,

und die Polycarbonate A Homopolycarbonate oder Copolycarbonatemit mittleren Gewichtsmittelmolekulargewichten von 10.000 bis 200.000 sind, wobei die Diphenole der Formel (IIa) nur für die Herstellung von Copolycarbonaten mit den Diphenolen der Formel (II) eingesetzt werden, und ihr Gewichtsanteil in den Copolycarbonaten 1 bis 20 Gew.-% ist, bezogen jeweils auf Gesamtgewicht der Diphenole der Formeln (II) und (IIa),

B.

0 bis 50 Gew.-Teile eines Pfropfpolymerisats aus

B.1

5 bis 90 Gew.-Teilen, vorzugsweise 30 bis 80 Gew.-Teilen einer Mischung aus

B.1.1

50 bis 95 Gew.-% Styrol, α-Methylstyrol, kernsubstituiertem Styrol, Methylmethacrylat oder Mischungen daraus, und

B.1.2

50 bis 5 Gew.-% (Meth)Acrylnitril, Methylmethacrylat, Maleinsäureanhydrid, N-substituiertem Maleinimid oder Mischungen daraus, auf

B.2

95 bis 10 Gew.-Teile, vorzugsweise 70 bis 20 Gew.-Teile, eines Kautschuks mit einer Glastemperatur $T_G \leq 10\,^\circ C$,

C.
5 bis 70 Gew.-Teile eines thermoplastischen Copolymerisats aus
C.1
50 bis 95 Gew.-% Styrol, α-Methylstyrol, kernsubstituiertem Styrol, Methylmethacrylat oder Mischungen daraus, und
C.2
50 bis 5 Gew.-% (Meth)Acrylnitril, Methylmethacrylat, Maleinsäureanhydrid, N-substituiertem Maleinimid oder Mischungen daraus,
D.
0 bis 15 Gew.-Teile einer niedermolekularen oder hochmolekularen Bromverbindung, bezogen auf jeweils 100 Gew.-Teile aus A. + C. + D. und gegebenenfalls B., wobei der Halogengehalt, resultierend aus den Komponenten A. + D., zwischen 3 und 10 Gew.-%, bezogen auf das Gesamtgewicht der Komponenten A. und D., beträgt,
E.
1 bis 20 Gew.-Teile, vorzugsweise 2 bis 15 Gew.-Teile, bezogen auf 100 Gew.-Teile A. + C. und gegebenenfalls B. und/oder D., einer Phosphorverbindung der Formel (I)

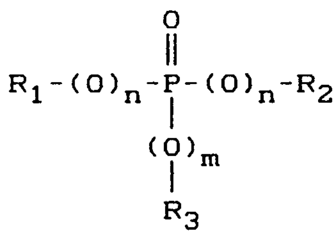

(I)

worin
$R_1$, $R_2$ und $R_3$ unabhängig voneinander $C_1$-$C_8$-Alkyl oder $C_6$-$C_{20}$-Aryl sind und
n und m unabhängig voneinander für 0 oder 1 stehen,
F.
0,05 bis 1,0 Gew.-Teile, insbesondere 0,1 bis 0,5 Gew.-Teile, bezogen auf 100 Gew.-Teile A. + C. und gegebenenfalls B. und/oder D., eines Tetrafluorethylenpolymerisats mit mittleren Teilchengrößen von 0,05 bis 1000 µm, einer Dichte von 1,2 bis 2,3 g/cm$^3$ und mit Fluorgehalten von 65 bis 76 Gew.-%, wobei die Komponente F. vorzugsweise in Form einer koagulierten Mischung von Emulsionen der Tetrafluorethylenpolymerisate F. einer mittleren Teilchengröße von 0,05 bis 20 µm und einer Dichte von 1,2 bis 1,9 g/cm$^3$ mit Emulsionen von Pfropfpolymerisaten B. eingesetzt wird, und wobei das Gewichtsverhältnis Pfropfpolymerisat B. zum Tetrafluorethylenpolymerisat F. zwischen 95:5 und 60:40 liegt. und
G.
0,2 bis 5,0 Gew.-Teile, vorzugsweise 1,0 bis 3,0 Gew.-Teile, bezogen auf 100 Gew.-Teile der Summe aus A. bis G., eines Polyalkylenethers, der mit 5 bis 0,05 Gew.-% (bezogen auf die Menge an Polyalkylenether) eines Radikalbildners modifiziert ist, der bei Temperaturen zwischen 20 und 200°C ausreichend schnell in Radikale zerfällt, wobei die zu modifizierenden Polyalkylenether Reaktionsprodukte aus Polyolen und einem oder mehreren Alkylenoxiden sind, und Molekulargewichte zwischen 500 und 15.000 besitzen, sowie gegebenenfalls wirksame Mengen an Stabilisatoren, Pigmenten, Fließhilfsmitteln und Entformungsmitteln.

Gemäß der DE-OS 2 228 072 werden thermoplastische Polycarbonate mit einem Gemisch aus Hexabrombenzol und einer Antimonverbindung flammwidrig eingestellt, welche zusätzlich einen Phosphatester als Synergisten enthalten können. Der alleinige Zusatz von 10 Gew.-Teilen Triphenylphosphat zu Bisphenol A-Polycarbonat hat allerdings keine Antitropfwirkung gemäß Entflammungstest U.L. Subj 94 (s. S. 20 der DE-OS 2 228 072).

Aus der DE-OS 2 434 085 sind verschäumbare thermoplastische Kunststoffe bekannt, wobei als Thermoplasten u.a. Polycarbonate, Polymerisate oder Mischungen davon genannt sind. Als Polymerisate sind auch solche aus Butadien, Styrol und Acrylnitril oder aus Styrol allein genannt. Als Flammschutzmittel können die verschäumbaren Kunststoffe Phosphatester enthalten, gegebenenfalls in Kombination mit Halogenverbindungen. Als Halogenverbindungen sind keine Polytetrafluorethylenpolymerisate empfohlen.

Aus US-Patent 4 355 126 bzw. 4 107 232 sind u.a. flammwidrige ABS-Polymerisate bekannt, die Polytetrafluorethylene enthalten. Als Flammschutzmittel ist Triphenylphosphat besonders bevorzugt.

EP-A 174 493 beschreibt thermoplastische Formmassen aus Polycarbonat, Pfropfpolymerisat und Copolymerisat, die durch einen Zusatz von Phosph(on)atestern, Tetrafluorethylenpolymerisaten und gegebenenfalls Halogenverbindungen flammwidrig ausgerüstet sind. JP-61-72 053 beschreibt, daß Polyether wirksame Antistatika für Zusammensetzungen, enthaltend Polycarbonate, Pfropfcopolymerisate und Copolymerisate sind.

EP-A 61 692 beschreibt gepfropfte Polyether als Antistatika für Zusammensetzungen, enthaltend Propfcopolymerisate.

Gemäß DE-OS 2 921 325 ist der Zusatz von Pentaerythritdiphosphaten und -diphosphonaten als Flammschutzmittel für Polycarbonate beschrieben, wobei zusätzlich Halogenverbindungen mitverwendet werden können, wobei dies gemäß Seite 9 der DE-OS 2 921 325 aus der zitierten US-Patentschrift 3 392 136 auch Polyvinylidenfluoride sein können Den Polycarbonaten können ABS-Copolymerisate zugemischt sein. Da jedoch die Phosphate bzw. Phosphonate der allgemeinen Struktur (I) als alleinige Zusätze zu einer PC/ABS-Mischung kein VO in 1,6 mm erbringen, dürfte sich aus dieser Literaturstelle der Gegenstand der vorliegenden Erfindung nicht ableiten lassen.

Aus den Deutschen Offenlegungsschriften Nr. 2 903 100 und 2 918 883 sind flammwidrige Mischungen aus Polycarbonaten, ABS-Polymerisaten und Halogenverbindungen bekannt. Gemäß DE-OS 2 903 100 wird die Flammwidrigkeit durch spezielle organische Sulfonate erreicht. Fluorierte Polyolefine können als tropfhemmende Mittel zugesetzt werden. Gemäß DE-OS 2 918 883 wird die Flammwidrigkeit durch Alkali- oder Erdalkalisalze von Säuren in Kombination mit Antitropfmitteln erreicht, wobei die Menge an ABS-Polymerisaten nur maximal 10 Gew.-%, bezogen auf Gesamtmischung, beträgt.

Gemäß EP-OS 0 074 112 werden zu Polycarbonat/ABS-Gemischen Phosphatester als Weichmacher zugegeben. Als Phosphatester ist beispielsweise Diphenyl-octyl-phosphat genannt. Ein Zusatz von fluorierten Polyolefinen ist nicht beschrieben.

GB-PS 14 59 648 beschreibt flammwidrige, nichttropfende Polymere, beispielsweise aus ABS-Polymeren oder aus Polycarbonaten, denen ein Flammschutzadditiv, wie beispielsweise Triphenylphosphat, ein nicht-brennbares Fasermaterial und Polytetrafluorethylenharz zugemischt worden ist. Das Beispiel 2 der GB-PS 14 59 648 zeigt, daß Polytetrafluorethylenharz ohne Faserzusatz nicht das Tropfen verhindert.

Bekannt sind auch flammwidrige Polymermischungen, die neben Polytetrafluorethylenen und organischen Halogenverbindungen Polyphosphate mit $\overline{M}w$ von 1600 bis 150 000 in Mengen von 1 bis 35 Gew.-% enthalten (EP-OS 0 103 230). Die Polycarbonate dieser Formmassen sind jedoch überwiegend aus tetramethylierten Diphenolen aufgebaut.

Somit haben diese Formmassen den Nachteil, daß sie ein deutlich niedrigeres mechanisches Niveau als die vorliegenden Formmassen aufweisen. Außerdem führt der Einsatz von Polyphosphaten in PC/ABS-Formmassen, die auf einem Polycarbonat beruhen, das keine alkylierten Diphenole enthält, zu keiner ausreichend flammschützenden Wirkung.

Aus der DE-OS 3 322 260 sind flammwidrige thermoplastische Formmasse bekannt, die

a. aromatische Polycarbonate,
b. SAN-Pfropfpolymerisate,
c. thermoplastische Polymerisate,
d. gegebenenfalls Halogenverbindungen,
e. Antimontrioxid, Antimoncarbonat, Wismuttrioxid oder Wismutcarbonat und
f. feinteiliges Tetrafluorethylenpolymerisat

enthalten, wobei dieses über eine wäßrige Emulsion des SAN-Pfropfpolymerisats b, und gegebenenfalls eine wäßrige Emulsion des thermoplastischen Polymerisats c. in die Formmasse eingebracht wird, wodurch gute Oberflächen der Formmassen erzielt werden.

Gemäß Seite 16 dieser DE-OS läßt sich dieses Prinzip der Einarbeitung von Tetrafluorethylenpolymerisaten auf alle polycarbonathaltigen Formmassen übertragen.

Bezüglich der schwierigen Verarbeitung von Polytetrafluorethylenen sei noch auf FR-PS 1 412 767 verwiesen, bezüglich der Einarbeitung von Polytetrafluorethylenen in Thermoplaste, wie aromatische Polycarbonate oder Polymerisate von ungesättigten Monomeren sei noch auf US-Patent 3 294 871 hingewiesen, sowie auf US-Patent 3 005 795, insbesondere Spalten 3/4, wo Fällung und Koagulation erwähnt sind.

Die antistatische Ausrüstung gegebenenfalls kautschukmodifizierter Polymerisate auf Basis von Vinylaromaten und anderen Vinylmonomeren, wie z.B. ABS und SAN ist seit Jahren bekannt. Als antistatische Mittel werden z.B. Alkyl- und Arylsulfonate (DOS 1 544 652), Amine (DE-PS 1 258 083), Salze quartärer Ammoniumverbindungen, Amide, Polyether (DE-PS 1 244 398) und Phosphorverbindungen, wie Phosphorsäuren und Phosphonate empfohlen. Diese Verbindungen sind jedoch als Antistatika für die hier in Rede stehenden Formmassen ungeeignet.

So ergibt sich beispielsweise, daß die in der Praxis für Styrolpolymerisate bewährten oxalkylierten

Amine (gemäß DE-PS 1 258 083) den Molekulargewichtsabbau der thermoplastischen Polycarbonate begünstigen (siehe z.B. D. Margotte in Ullmanns Encyclopädie der technischen Chemie, 4. Auflage, Bd. 19, Seite 55, Verlag Chemie, Weinheim 1980 und H. Krimm in Methoden der organischen Chemie (Houben-Weyl), 4. Auflage, Bd. XIV/2, S. 48, Thieme Verlag, Stuttgart 1963), während die für aromatische Polycarbonate üblichen Antistatika, z.B. Sulfonsäuresalze (DOS 2 931 172 und DOS 3 004 017) wiederum in Styrolpolymerisaten nicht genügend wirksam sind.

Also stellte sich die Aufgabe, ein gut wirksames Antistatikum zu finden, das sowohl für Styrolpolymerisate als auch für aromatische Polycarbonate und damit insbesondere für Gemische aus beiden brauchbar ist.

Die erfindungsgemäße Aufgabe wird dadurch gelöst, daß man Polyalkylenether einsetzt, die durch Behandlung mit einem Radikalbildner modifiziert wurden. Die erhaltenen Antistatika zeichnen sich durch große Wirksamkeit aus, ohne andere Eigenschaften, wie mechanische Festigkeit, Oberflächenglanz und die Verarbeitbarkeit, negativ zu beeinflussen.

Erfindungsgemäß geeignete, thermoplastische, aromatische Polycarbonate A sind solche auf Basis der Diphenole der Formel (II)

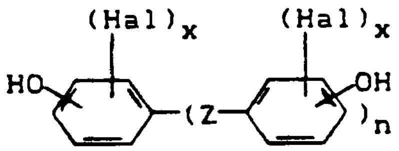

(II),

worin Z eine Einfachbindung, ein $C_1$-$C_5$-Alkylenrest, ein $C_2$-$C_5$-Alkylidenrest, ein $C_5$-$C_6$-Cycloalkylidenrest, -S-oder -$SO_2$-, Hal, Chlor oder Brom, x 0, 1 oder 2 und n 1 oder 0 sind, und gegebenenfalls der Formel (IIa)

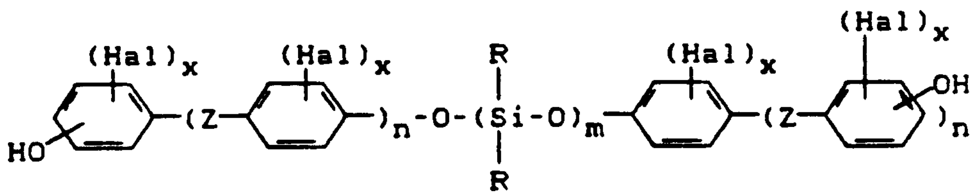

(IIa)

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$-Alkyl, $C_6$-$C_{20}$-Aryl, vorzugsweise $CH_3$, bedeuten und m eine ganze Zahl von 5 bis 100, vorzugsweise 20 bis 80 ist.

Erfindungsgemäß geeignete Polycarbonate A sind Homopolycarbonate und Copolycarbonate, wobei die Diphenole der Formel (IIa) nur für die Herstellung von Copolycarbonaten mit den Diphenolen der Formel (II) eingesetzt werden, und ihr Gewichtsanteil in den Copolycarbonaten 1 bis 20 Gew.-%, vorzugsweise 1,5 bis 15 Gew.-% und insbesondere 2 bis 10 Gew.-% ist, bezogen jeweils auf Gesamtgewicht der Diphenole der Formeln (II) und (IIa).

Die Komponente A kann auch aus Mischungen der vorstehend definierten thermoplastischen Polycarbonate bestehen, wobei, wenn es sich um Mischungen mit Polydiorganosiloxan-Polycarbonat-Blockcopolymeren handelt, der Gewichtsanteil der Diphenole (IIa), bezogen auf die Gesamtsumme der Diphenole in der Polycarbonatmischung, zwischen 1 und 20 Gew.-% liegt.

Die erfindungsgemäß geeigneten Polycarbonate A sind bekannt, sie können beispielsweise mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch bekannte Kettenabbrecher eingestellt werden kann. (Für polydiorganosiloxanhaltige Polycarbonate siehe DE-OS 3 334 873.)

Geeignete Kettenabbrecher sind beispielsweise Phenol, p-Chlorphenol, p-tert.-Butylphenol oder 2,4,6-Tribromphenol, und langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten gemäß DE-OS 3 506 472 wie 3,5-Di-tert.-butylphenol, p-iso-Octylphenol, p-tert.-Octylphenol, p-Dodecylphenol und 2-(3,5-Dimethylheptyl)-phenol und 4-(3,5-Dimethyl-heptyl)-phenol. Die Menge an einzusetzenden Kettenabbrechern beträgt im allgemeinen zwischen 0,5 Mol-% und 10 Mol-%, bezogen auf die Summe der jeweils eingesetzten Diphenole (II) und gegebenenfalls (IIa).

Die erfindungsgemäß geeigneten Polycarbonate A haben mittlere Gewichtsmittelmolekulargewichte ($\overline{M}$w, gemessen beispielsweise durch Ultrazentrifugation oder Streulichtmessung) von 10 000 bis 200 000, vorzugsweise von 20 000 bis 80 000.

Geeignete Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-(hydroxyphenyl)-cyclohexan, 2,2-Bis-(3-chlor-4-hydroxyphenyl)-propan, 2,2-Bis-(3,5-di-chlor-4-hydroxyphenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Geeignete Diphenole der Formel (IIa) sind solche, in denen R Methyl, Ethyl, Propyl, n-Butyl, tert.-Butyl oder Phenyl ist.

Bevorzugt Diphenole der Formel (IIa) sind die der Formel (IIb),

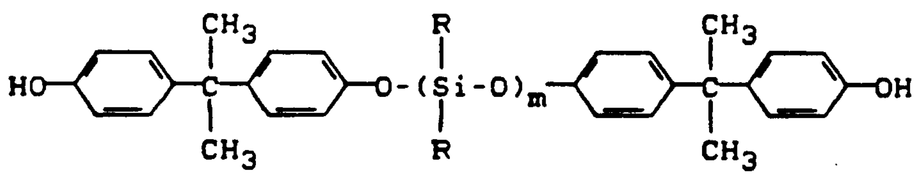 (IIb)

worin die Reste gleich sind und die vorstehend genannte Bedeutung haben, also bevorzugt Methyl etc. oder Phenyl bedeuten und m eine ganze Zahl von 5 bis 100, vorzugsweise von 20 bis 80, ist.

Die Diphenole der Formel (IIa) können aus den entsprechenden Bis-Chlorverbindungen (III)

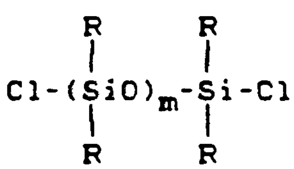 (III)

und die Diphenolen (II) beispielsweise gemäß US-Patent 3 419 634, in Kombination mit US-Patent 3 189 662 hergestellt werden.

In den Bis-Chlorverbindungen (III) haben R und m die Bedeutung wie in den Diphenolen (IIa) bzw. (IIb).

Die erfindungsgemäß geeigneten Polycarbonate A können in bekannter Weise verzweigt sein, vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Bevorzugt Polycarbonate sind neben dem Bisphenol A-Homopolycarbonat die Copolycarbonate von Bisphenol A mit bis zu 15 Mol-%, bezogen auf die Molsummen an Diphenolen, an 2,2-Bis-(3,5-dibrom-4-hydroxyphenyl)-propan oder die Copolycarbonate der Diphenole der Formel (II) mit 1 bis 20 Gew.-% an Diphenolen der Formel (IIa), vorzugsweise der Formel (IIb), bezogen jeweils auf die Gewichtssumme der Diphenole (II) und (IIa), bzw. (II) und (IIb).

Zur Herstellung der Pfropfpolymerisate B geeignete Kautschuke sind insbesondere Polybutadien, Butadien/Styrol-Copolymerisate (beide auch copolymerisiert mit bis zu 30 Gew.-%, bezogen auf Kautschukgewicht, eines niederen Alkylesters von Acryl- oder Methacrylsäure wie Methylmethacrylate, Ethylacrylate, Methylacrylat oder Ethylmethacrylat) Polyisopren, Polychlorpren Alkylacrylatkautschuke (aus $C_1$-$C_8$-Alkylacrylaten, insbesondere Ethyl-, Butyl-, Ethylhexylacrylat). Die Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten, sowie kleinere Mengen, vorzugsweise bis zu 5 Gew.-%, bezogen auf Kautschukgewicht, vernetzend wirkender, ethylenisch ungesättigter Monomerer, Solche Vernetzer sind z.B. Alkylendiol-di-(meth)-acrylate, Polyesterdi-(meth)-acrylate, Divinylbenzol, Trivinylbenzol, Triallylcyanurat, Allyl-(meth)-acrylat, Butadien oder Isopren. Als Acrylatkautschuke kommen auch

solche infrage, die einen vernetzten Dienkautschuk aus einem oder mehreren konjugierten Dienen und gegebenenfalls einem ethylenisch ungesättigten Monomer, wie Styrol und/oder Acrylnitril, als Kern enthalten. Andere geeignete Kautschuke sind beispielsweise EPDM-Kautschuke, also Kautschuke aus Ethylen, Propylen und einem unkonjugierten Dien.

Bevorzugte Kautschuke zur Herstellung der Pfropfpolymerisate B sind Dien- und Alkylacrylatkautschuke.

Die Kautschuke liegen in den Pfropfpolymerisaten B, in Form wenigstens partiell vernetzter Teilchen einer mittleren Teilchengröße von 0,09 bis 5 µm, insbesondere 0,1 bis 1 µm vor. Die Propfpolymerisate B. werden durch radiakalische Pfropfcopolymerisate der eingangs definierten Monomerengemische aus B.1.1 und B.1.2. in Gegenwart der zu pfropfenden Kautschuke B.2 hergestellt und sind durchweg bekannt. Bevorzugte Herstellungsverfahren für die Pfropfpolymerisate B. sind Emulsions-, Lösungs-, Masse- oder Suspensionspolymerisation. Besonders bevorzugte Pfropfpolymerisate B. sind die sogenannten ABS-Polymerisate. Als kernsubstituierte Styrole seien Halogenstyrole und p-Methylstyrol erwähnt.

Bevorzugte Copolymerisate gemäß Komponente C. sind solche aus wenigstens einem Monomeren aus der Reihe Styrol, α-Methylstyrol, Halogenstyrol gemäß C.1 mit wenigstens einem Monomeren aus der Reihe Acrylnitril, Methacrylnitril, Methylmethacrylat, Maleinsäureanhydrid gemäß C.2.

Copolymerisate gemäß Komponente C. entstehen häufig bei der Pfropfpolymerisation zur Herstellung der Komponente B. als Nebenprodukte, besonders dann, wenn große Mengen Monomere auf kleine Mengen Kautschuk gepfropft werden.

Die erfindungsgemäß einzusetzende Menge an Copolymerisat C. von 5 bis 70 Gew.-Teilen, bezogen auf 100 Gew.-Teile aus A. + C. und gegebenenfalls B und/oder D., bezieht diese Nebenprodukte der Pfropfpolymerisation nicht mit ein.

Die Copolymerisate gemäß Komponente C. sind harzartig, thermoplastisch und kautschukfrei. Besonders bevorzugte Copolymerisate C. sind solche aus Styrol mit Acrylnitril und gegebenenfalls mit Methylmethacrylat, aus α-Methylstyrol mit Acrylnitril und gegebenenfalls mit Methylmethacrylate oder aus Styrol und α-Methylstyrol mit Acrylnitril und gegebenenfalls mit Methylmethacrylat.

Besonders bevorzugte Gewichtsverhältnisse im thermoplastischen Copolymerisat C. sind 60 bis 80 Gew.-% C.1 und 40 bis 20 Gew.-% C.2.

Die Copolymerisate gemäß Komponente C. sind bekannt und lassen sich durch radikalische Polymerisation, insbesondere durch Emulsions-, Suspensions-, Lösungs- oder Massepolymerisation herstellen. Die Copolymerisate gemäß Komponente C besitzen vorzugsweise Molekulargewichte $\overline{M}w$ (Gewichtsmittel, ermittelt durch Lichtstreuung oder Sedimentation) zwischen 15 000 und 200 000.

Erfindungsgemäß geeignete organische Bromverbindungen D. sind im Prinzip alle, die bei der Herstellung und Verarbeitung der erfindungsgemäßen Formmassen nicht flüchtig und thermisch stabil sind, d.h. dabei kein Halogen abspalten, und somit im Brandfall ihre Flammschutzwirkung ausüben können Insbesondere sind geeignet Decabromdiphenylether, Octabromdiphenyl, Octabromdiphenylether und Tribromtetrachlortoluol, ferner oligomere Bromverbindungen wie beispielsweise Oligocarbonate auf Basis Tetrabrombisphenol A.

Es kommen auch polymere Bromverbindungen wie beispielsweise hochmolekulare Polycarbonate auf Basis Tetrabrombisphenol A oder kernbromierte Polyphenylenoxide infrage.

Der Halogengehalt, resultierend aus der Komponente D. kann somit auch über das hochmolekulare Polycarbonat gemäß Komponente A. eingebracht werden, wobei bei fehlender Komponente D. die Polycarbonatkomponente A. den Halogengehalt von 3 bis 10 Gew.-% enthalten muß.

Die erfindungsgemäß einzusetzenden Phosphorverbindungen gemäß Komponente E. sind generell bekannt (siehe beispielsweise Ullmann, Encyclopädie der technischen Chemie, Band 18, Seiten 301 ff, 1979).

$C_1$-$C_8$-Alkylreste gemäß $R_1$, $R_2$ oder $R_3$ der Formel (I) sind, Butyl, Methyl und Octyl.

$C_6$-$C_{20}$-Arylreste gemäß $R_1$, $R_2$ oder $R_3$ der Formel (I) sind, Phenyl, Kresyl, Isopropylphenyl und Naphthyl.

Erfindungsgemäß einsetzbare Phosphorverbindungen gemäß Formel (I) sind Tributylphosphat, phosphat,, Triphenylphosphat, Trikresylphosphat, Diphenylkresylphosphat, Diphenyloctylphosphat, Diphenyl-2-ethylkresylphosphat, Tri(isopropylphenyl)phosphat, Methanphosphonsäuredimethylester, Methanphosphonsäurediphenylester und Phenylphosphonsäurediethylester.

Die erfindungsgemäß geeigneten Tetrafluorethylenpolymerisate gemäß Komponente F. sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomere. Die Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise

Natrium-, Kalium- oder Ammoniumperoxydisulfat bei Drucken von 7 bis 71 kg/cm$^2$ und bei Temperaturen von 0 bis 200 ° C, vorzugsweise bei Temperaturen von 20 bis 100 ° C. (Nähere Einzelheiten siehe beispielsweise US-Patent 2 393 967). Je nach Einsatzform kann die Dichte dieser Materialien zwischen 1,2 und 2,3 g/cm$^3$, die mittlere Teilchengröße zwischen 0,05 und 1000 µm liegen.

Erfindungsgemäß bevorzugte Polytetrafluorethylene haben mittlere Teilchengrößen von 0,05 bis 20 µm, vorzugsweise 0,08 bis 10 µm und eine Dichte von 1,2 bis 1,9 g/cm$^3$ und werden in Form einer koagulierten Mischung von Emulsionen der Tetrafluorethylenpolymerisate F. mit Emulsionen der Pfropfpolymerisate B. eingesetzt.

Geeignete, in Pulverform einsetztbare Tetrafluorethylenpolymerisate F. haben beispielsweise Teilchengrößen von 100 µm bis 1000 µm und Dichten von 2,0 bis 2,3 g/cm$^3$.

Durch den Zusatz von Tetrafluorethylenpolymerisaten wird insbesondere das Abtropfen der Formmassenschmelze während des Brandvorganges reduziert oder ganz verhindert; durch den Einsatz in Form einer koagulierten Mischung wird darüber hinaus noch die Oberfläche von aus den erfindungsgemäßen Mischungen hergestellten Formkörper verbessert, was besonders für die Herstellung sehr großflächiger Teile bzw. für die Herstellung bei sehr hohen Verarbeitungstemperaturen wichtig ist.

Zur Herstellung einer koagulierten Mischung aus B. und F. wird zuerst eine wäßrige Emulsion (Latex) eines Pfropfpoly merisates B. mit mittleren Latexteilchengrößen von 0,1 bis 2 µm, insbesondere 0,2 bis 0,6 µm, mit einer feinteiligen Emulsion eines Tetrafluorethylenpolymerisates F. in Wasser mit mittleren Teilchengrößen von 0,05 bis 20 µm, insbesondere von 0,08 bis 10 µm vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate B. besitzen Feststoffgehalte von 25 bis 50 Gew.-%, vorzugsweise von 30 bis 45 Gew.-%.

In der Emulsionsmischung liegt das Gewichtsverhältnis Pfropfpolymerisate B. zum Tetrafluorethylenpolymerisat F. zwischen 95:5 und 60:40. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20 bis 150 ° C, insbesondere von 50 bis 100 ° C. Falls erforderlich, kann bei 50 bis 200 ° C, bevorzugt 70 bis 100 ° C getrocknet werden.

Geeignete Tetrafluorethylenpolymerisat-Emulsionen sind handelsübliche Produkte und werden beispielsweise von der Firma DuPont als Teflon® 30 N angeboten.

Antistatische Mittel G. im Sinne der Erfindung sind Polyalkylenether, die mit einer oder mit mehreren radikalbildenden Substanzen behandelt werden.

Die erfindungsgemäß zu modifizierenden Polyalkylenether ("Ausgangs-Polyether") sind aus di- und polyfunktionellen (cyclo)aliphatischen Resten aufgebaut und können in geringem Maße auch olefinische Gruppen enthalten. Geeignet sind Reaktionsprodukte aus Di-oder Polyolen, Ethylenglykol, 1,2-Propylenglykol, Trimethylolpropan, Glycerin, Pentaerythrit, Sorbit und Mannit und einem oder mehreren Alkylenoxiden, wie Ethylenoxid und Propylenoxid. (Herstellung und Verwendung siehe Ullmanns Encyklopädie der technischen Chemie, 4. Aufl., Bd. 19, S. 31, Verlag Chemie, Weinheim 1980). Dabei werden Polyalkylenglykole mit hohen Anteilen an 1,2-Propylenstrukturen bevorzugt.

Es können sowohl lineare als auch verzweigte Polyalkylenether verwendet werden, wobei mäßig verzweigte Typen bevorzugt werden.

Die "Ausgangs"-Polyalkylenether besitzen Molekulargewichte zwischen 500 und 15.000, bevorzugt zwischen 1000 und 10.000 und besonders bevorzugt zwischen 2000 und 5000.

Als radikalbildende Substanzen kommen als Initiatoren für die radikalische Polymerisation handelsübliche Verbindungen sowie alle sonstigen Verbindungen in Frage, die bei Temperaturen zwischen 20 und 200 ° C ausreichend schnell in Radikale zerfallen. So kann man beispielsweise Diacylperoxide wie Dibenzoylperoxid, substituierte Dibenzoylperoxide und Dilaurylperoxid, Acylsulfonylperoxide wie Acetylcyclohexansulfonylperoxid, Peroxidicarbonate wie Dicyclohexyl- und Di-tert.-butylperoxidicarbonat, Acylperester wie tert.-Butylperpivalat und tert.-Butylperbenzoat, Dialkylperoxide wie Dicumyl- und Di-tert.-butylperoxid, Hydroperoxide wie Cumylhydroperoxid und tert.-Butylhydroperoxid und andere Peroxyverbindungen sowie aliphatische und araliphatische Azoverbindungen einsetzen. Bevorzugte Radikalbildner zerfallen ausreichend schnell bei Temperaturen von 60 - 140 ° C, z. B. Azodiisobutyronitril, Di-tert.-butylperoxid, Dibenzoylperoxid, tert.-Butylperbenzoat, Dicumylperoxid und 1,3-Bis-(tert.-butylperoxyisopropyl)benzol. Besonders bevorzugt wird Dibenzoylperoxid verwendet.

Die Menge der Radikalbildner bezogen auf die Menge an Polyalkylenether beträgt 5 - 0,05 Gew.-%, bevorzugt 2,0 - 0,1 Gew.-% und besonders bevorzugt 1,0 - 0,25 Gew.-%.

Die erfindungsgemäßen modifizierten Polyalkylenether kann man durch einfaches Rühren des Radikalbildners mit dem jeweiligen Polyalkylenether bei Temperaturen zwischen 50 uns 150 ° C herstellen.

Die modifizierten Polyalkylenether sind in der Regel mittel- bis hochviskose, nahezu klare Flüssigkeiten oder farblose Suspensionen.

Die erfindungsgemäßen Formmassen können weitere bekannte Zusätze, wie Stabilisatoren, Pigmente, Fließmittel und/oder Entformungsmittel enthalten.

Die erfindungsgemäßen Formassen, bestehen aus den Komponenten A., C., E., F., G. sowie gegebenenfalls B. und/oder D. und gegebenenfalls weiteren bekannten Zusätzen wie Stabilisatoren, Pigmenten, Fließmitteln und/oder Entformungsmitteln werden hergestellt, indem man die jeweiligen Bestandteile in bekannter Weise vermischt und bei Temperaturen von 200 °C bis 330 °C in üblichen Aggregaten wie Innenknetern, Extrudern oder Doppelwellenschnecken schmelzcompoundiert oder schmelzextrudiert, wobei die Komponente F. vorzugsweise in Form der bereits erwähnten koagulierten Mischung eingesetzt wird.

Gegenstand der vorliegenden Erfindung ist somit auch ein Verfahren zur Herstellung von thermoplastischen Formmassen bestehend aus den Komponente A., C., E., F., G. und gegebenenfalls der Komponente B., der Komponente D., Stabilisatoren, Pigmenten, Fließmitteln und/oder Entformungsmitteln, das dadurch gekennzeichnet ist, daß man die Komponenten A., C., E., F., G. und gegebenenfalls die Komponente B., die Komponente D., Stabilisatoren, Pigmente, Fließmittel und/oder Entformungsmittel nach erfolgter Vermischung bei Temperaturen von 200 °C bis 330 °C in gebräuchlichen Aggregaten schmelzcompoundiert oder schmelzextrudiert, wobei die Komponente F. vorzugsweise in Form einer koagulierten Mischung mit der Komponente B. eingesetzt wird.

Die Vermischung der einzelnen Bestandteile kann in bekannter Weise sowohl sukzessive als auch simultan erfolgen, und zwar sowohl bei etwa 20 °C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer Büromaschinen oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlerer Teilchendurchmesser $d_{50}$, ermittelt durch Ultrazentrifugenmessungen nach W. Scholtan et al., Colloids. u. Z. Polymere 250 (1972) 782-796.

Beispiele

Eingesetzte Polykondensate und Polymerisate

A.
Ein Copolycarbonat aus Bisphenol A mit 10 Gew.-% Tetrabrombisphenol A mit einer relativen Lösungsviskosität von 1,284, gemessen in $CH_2Cl_2$ bei 25 °C und einer Konzentration von 0,5 Gew.-%, Gehalt an Brom: 5 Gew.-%.

B.
SAN-Pfropfpolymerisat von 50 Gew.-% Styrol-Acrylnitril-Gemisch (im Gew.-Verhältnis von 72:28) auf 50 % teilchenförmiges Polybutadien einer mittleren Teilchengröße ($d_{50}$) von 0,4 µm, erhalten durch Emulsionspolymerisation.

C.
Styrol-Acrylnitril-Copolymerisat mit einem Styrol-Acrylnitril-Verhältnis von 72:28 und einer Grenzviskosität $[\eta]$ = 0,55 dl/g (Messung in Dimethylformamid bei (20 °C).

E.
Triphenylphosphat

F.
Tetrafluorethylenpolymerisat als koagulierte Mischung aus einer SAN-Pfropfpolymerisat-Emulsion in Wasser und einer Tetrafluorethylenpolymerisat-Emulsion in Wasser. Das Gewichtsverhältnis Pfropfpolymerisat B. zum Tetrafluorethylenpolymerisat F. in der Mischung ist 90 Gew.-% : 10 Gew.-%. Die Tetrafluorethylenpolymerisat-Emulsion besitzt einen Feststoffgehalt von 60 %; die Teilchengröße liegt zwischen 0,05 und 0,5 µm. Die SAN-Pfropfpolymerisat-Emulsion besitzt einen Feststoffgehalt von 34 Gew.-% und hatte eine Latexteilchengröße von 0,3 bis 0,4 µm.

Herstellung von F:

Die Emulsion des Tetrafluorethylenpolymerisats wurde mit der Emulsion des SAN-Pfropfpolymerisat B. vermischt und mit 1,8 Gew.-%, bezogen auf Polymerfeststoff, phenolischer Antioxidantien stabilisiert. Bei 85 bis 95 ° C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100 ° C zu einem Pulver getrocknet. Dieses Pulver kann dann mit den weiteren Komponenten in den beschriebenen Aggregaten compoundiert werden.

Die Compoundierung der Einzelkomponenten erfolgte auf einem 3-l-Innenkneter bei einer Temperatur von 200 bis 220 ° C.

Die Herstellung von Formkörpern erfolgte auf einer Spritzgußmaschine bei 240 ° C.

Das Brandverhalten der Proben wurde nach UL-Subj. 94 V in Prüfkörperdicken von 1,6 mm gemessen. Der UL-94-Test wird wie folgt durchgeführt:
Substanzproben werden zu Stäben der Abmessungen 127 × 12,7 × 1,6 mm geformt. Die Stäbe werden vertikal so montiert, daß die Unterseite des Probekörpers sich 305 mm über einem Streifen Verbandstoff befindet. jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einer Wärmeeinheit von $3{,}73 \times 10^4$ kJ/m$^3$ (1,000 BTU per cubic foot) benutzt.

Die UL-94 V-O-Klassifizierung umfaßt die nachstehend beschriebenen Eigenschaften von Materialien, die gemäß der UL-94-Vorschrift geprüft wurden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernung der Testflamme glimmen.

Andere UL-94-Klassifizierungen bezeichnen Proben, die weniger flammwidrig und selbstverlöschend sind und die flammende Tropfen oder Teilchen abgeben. Die Klassifizierungen werden mit UL-94 V-1 und V-2 bezeichnet.

N. B. heißt "nicht bestanden" und ist die Klassifizierung von Proben die eine Nachbrennzeit von ≧ 30 s ausweisen.

Die Bestimmung der Wärmeformbeständigkeit nach Vicat (Methode B) erfolgt gemäß DIN 53 460.

Die Bestimmung der Kerbschlagzähigkeit erfolgte in Anlehnung an DIN 53 456/ISO R 179 in Stäben der Abmessung 50 × 6 × 4 mm, wobei die Stäbe mit einer V-förmigen Kerbe der Kerbtiefe 2,7 mm versehen wurden.

Der Staubtest wurde an Platten der Abmessungen 90 x 60 x 3 mm durchgeführt. Die Platten wurden in spritzfrischem Zustand bzw. nach 14-tägiger Lagerung in einem staubfreien Raum mit Aluminiumpulver bestäubt und die Bildung von Staubfiguren visuell beurteilt.

Die Herstellung der Formmassen erfolgt dergestalt, daß ein Ausgangsblend mit den in der folgenden Tabelle aufgezeigten Mengen der erfindungsgemäßen Antistatikmittel entsprechend obengemachten Angaben compoundiert wurde.

Das Ausgangsblend besaß folgende Zusammensetzung:
67,7 Gew.-Teile A
12,2 Gew.-Teile B
20,1 Gew.-Teile C
und bezogen auf 100 Gew.-Teile A. + B. + C.
11,6 Gew.-Teile E
0,42 Gew.-Teile F, koaguliert mit 3,78 Gew.-Teilen B.

Als Hilfsstoffe wurden, bezogen auf 100 Gew.-Teile A. + B. + C., 2,5 Gew.-Teile Titandioxid als Pigment und 1,0 Gew.-Teile Pentaerythrittetrastearat als Entformungsmittel eingesetzt.

Als Antistatikmittel G. wurde ein Produkt eingesetzt, das wie folgt hergestellt wurde:
1,0 kg eines linearen Polypropylenglykols mit einem mittleren Molekulargewicht (Zahlenmittel) $\overline{M}n$ = 2000 (OH-Zahl = 56 ± 1) wurden im Vakuum unter Erhitzen auf 120 ° C entgast und mit Stickstoff gesättigt. Bei einer Temperatur <40 ° C gibt man 6,6 g käufliches Dibenzoylperoxid zu und erhitzt die Mischung unter Stickstoffatmosphäre 8 h lang auf 80 bis 85 ° C.

Die nachfolgende Tabelle zeigt, daß die erfindungsgemäßen Antistatika die wichtigsten Produkteigenschaften wie Brandwidrigkeit, Zähigkeit und Wärmeformbeständigkeit nicht bzw. nur unwesentlich verschlechtern.

| Ausgangsblend (Gew.-Teile) | G. | UL-94 V (1,6 mm) | Kerbschlagzähigkeit $kJ/m^2$ | Vicat-$B_{120}$ °C | Staubtest (Staubfigurenbildung) Ausgangszustand | 14 Tage |
|---|---|---|---|---|---|---|
| erfindungsgemäßer Versuch | | | | | | |
| 119,3 | 1,5 | V0 | 13 | 89 | keine | keine |
| Vergleichsversuch | | | | | | |
| 119,3 | - | V0 | 18 | 92 | stark | stark |

**Patentansprüche**

**Patentansprüche für folgende Vertragsstaaten : DE, FR, GB, IT, NL**

**1.** Thermoplastische Formmassen, enthaltend

A.

20 bis 90 Gew.-Teile eines thermoplastischen aromatischen Polycarbonats auf Basis der Diphenole der Formel (II)

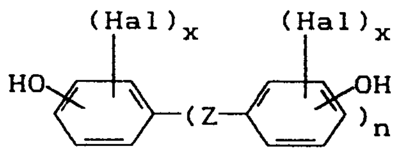

(II),

worin Z eine Einfachbindung, ein $C_1$-$C_5$-Alkylenrest, ein $C_2$-$C_5$-Alkylidenrest, ein $C_5$-$C_6$-Cycloalkylidenrest, -S- oder $SO_2$, Hal, Chlor oder Brom, x 0, 1 oder 2 und n 1 oder 0 sind, und gegebenenfalls der Formel (IIa)

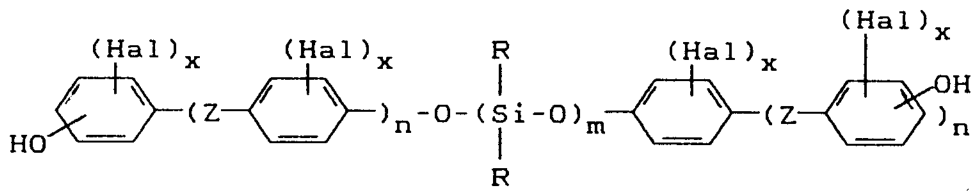

(IIa)

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$- Alkyl, $C_6$-$C_{20}$-Aryl bedeuten und m eine ganze Zahl von 5 bis 100 ist,
und die Polycarbonate A Homopolycarbonate oder Copolycarbonatemit mittleren Gewichtsmittelmolekulargewichten von 10.000 bis 200.000 sind, wobei die Diphenole der Formel (IIa) nur für die Herstellung von Copolycarbonaten mit den Diphenolen der Formel (II) eingesetzt werden, und ihr Gewichtsanteil in den Copolycarbonaten 1 bis 20 Gew.-% ist, bezogen jeweils auf Gesamtgewicht der Diphenole der Formeln (II) und (IIa),

B.

0 bis 50 Gew.-Teile eines Pfropfpolymerisats aus

B.1

5 bis 90 Gew.-Teilen einer Mischung aus

B.1.1

50 bis 95 Gew.-% Styrol, α-Methylstyrol, kernsubstituiertem Styrol, Methylmethacrylat oder Mischungen daraus, und

B.1.2

50 bis 5 Gew.-% (Meth)Acrylnitril, Methylmethacrylat, Maleinsäureanhydrid, N-substituiertem Maleinimid oder Mischungen daraus, auf

B.2

95 bis 10 Gew.-Teile eines Kautschuks mit einer Glastemperatur $T_G \leqq 10\,°C$,

C.

5 bis 70 Gew.-Teile eines thermoplastischen Copolymerisats aus

C.1

50 bis 95 Gew.-% Styrol, α-Methylstyrol, kernsubstituiertem Styrol, Methylmethacrylat oder Mischungen daraus, und

C.2

50 bis 5 Gew.-% (Meth)Acrylnitril, Methylmethacrylat, Maleinsäureanhydrid, N-substituiertem Maleinimid oder Mischungen daraus,

D.

0 bis 15 Gew.-Teile einer niedermolekularen oder hochmolekularen Bromverbindung, bezogen auf jeweils 100 Gew.-Teile aus A. + C. + D. und gegebenenfalls B., wobei der Halogengehalt, resultierend aus den Komponenten A. + D., zwischen 3 und 10 Gew.-%, bezogen auf das Gesamtgewicht der Komponenten A. und D., beträgt,

E.
1 bis 20 Gew.-Teile, bezogen auf 100 Gew.-Teile A. + C. und gegebenenfalls B. und/oder D., einer Phosphorverbindung der Formel (I)

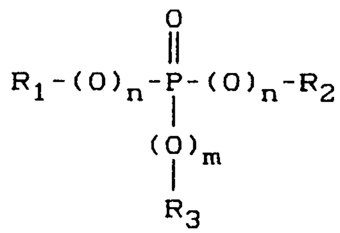 (I)

worin
$R_1$, $R_2$ und $R_3$ unabhängig voneinander $C_1$-$C_8$-Alkyl oder $C_6$-$C_{20}$-Aryl sind und n und m unabhängig voneinander für 0 oder 1 stehen,
F.
0,05 bis 1,0 Gew.-Teile bezogen auf 100 Gew.-Teile A. + C. und gegebenenfalls B. und/oder D., eines Tetrafluorethylenpolymerisats mit mittleren Teilchengrößen von 0,05 bis 1000 $\mu$m, einer Dichte von 1,2 bis 2,3 g/cm$^3$ und mit Fluorgehalten von 65 bis 76 Gew.% und
G.
0,2 bis 5,0 Gew.-Teile bezogen auf 100 Gew.-Teile der Summe aus A. bis G., eines Polyalkylenethers, der mit 5 bis 0,05 Gew.-% (bezogen auf die Menge an Polyalkylenether) eines Radikalbildner modifiziert ist, der bei Temperaturen zwischen 20 und 200 °C ausreichend schnell in Radikale zerfällt, wobei die zu modifizierenden Polyalkylenether Reaktionsprodukte aus Polyolen und einem oder mehreren Alkylenoxiden sind, und Molekulargewichte zwischen 500 und 15.000 besitzen.

**2.** Formmassen gemäß Anspruch 1, dadurch gekennzeichnet, daß die Komponente F. in Form einer koagulierten Mischung von Emulsionen der Tetrafluorethylenpolymerisate F. einer mittleren Teilchengroße von 0,05 bis20 $\mu$m und einer Dichte von 1,2 bis 1,9 g/cm$^3$ mit Emulsionen von Pfropfpolymerisaten B, eingesetzt wird, das Gewichtsverhältnis Pfropfpolymerisat B. zum Tetrafluorethylenpolymerisat F. zwischen 95:5 und 60:40 liegt.

**3.** Formmassen gemäß Anspruch 1, dadurch gekennzeichnet, daß das Tetrafluorethylenpolymerisat gemäß Komponente F. mittlere Teilchengrößen von 100 bis 1000 $\mu$m und eine Dichte von 2,0 bis 2,3 g/cm$^3$ hat.

**4.** Formmassen gemäß Ansprüche 1 bis 3, dadurch gekennzeichnet, daß die Komponente G. in Mengen von 1,0 bis 3,0 Gew.-Teilen eingesetzt wird.

**5.** Formmassen gemäß Ansprüche 1 bis 4, dadurch gekennzeichnet, daß die Komponente B. aus 30 bis 80 Gew.-Teilen 0.1 und 70 bis 20 Gew.-Teilen 0.2 zusammengesetzt ist.

**6.** Formmassen gemäß Ansprüche 1 bis 5, dadurch gekennzeichnet, daß die Komponente E. in Mengen von 2 bis 15 Gew.-Teilen eingesetzt wird.

**7.** Formmassen gemäß Ansprüche 1 bis 6, dadurch gekennzeichnet, daß die Komponente F. in Mengen von 0,1 bis 0,5 Gew.-Teilen eingesetzt wird.

**8.** Formmassen gemäß Ansprüche 1 bis 7, bestehend aus den Komponenten A., C., E., F., G. und gegebenenfalls B. und/oder D. und zusätzlich mindestens einem Zusatz, ausgewählt aus der Gruppe der Stabilisatoren, Pigmente, Fließmittel und Entformungsmittel.

**9.** Verfahren zur Herstellung der Formmassen gemäß Ansprüche 1 bis 7, dadurch gekennzeichnet, daß man die Komponenten A., C., E., F., G. und gegebenenfalls B. und/oder D. in bekannter Weise vermischt und danach bei Temperaturen von 200 bis 330 °C in gebräuchlichen Aggregaten schmelzcompoundiert oder schmelzextrudiert.

10. Verfahren zur Herstellung der Formmassen des Anspruchs 8 gemäß Anspruch 9, dadurch gekennzeichnet, daß man mindestens einen Zusatz, ausgewählt aus der Gruppe Stabilisatoren, Pigmente, Fließmittel und Entformungsmittel einbezieht.

**Patentansprüche für folgenden Vertragsstaat : ES**

1. Verfahren zur Herstellung von thermoplastischen Formmassen, enthaltend
A.
20 bis 90 Gew.-Teile eines thermoplastischen aromatischen Polycarbonats auf Basis der Diphenole der Formel (II)

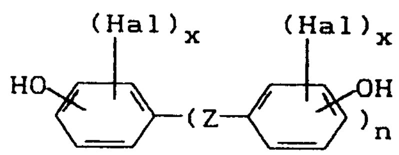
(II),

worin Z eine Einfachbindung, ein $C_1$-$C_5$-Alkylenrest, ein $C_2$-$C_5$-Alkylidenrest, ein $C_5$-$C_6$-Cycloalkylidenrest, -S- oder -$SO_2$-, Hal, Chlor oder Brom, x 0, 1 oder 2 und n 1 oder 0 sind, und gegebenenfalls der Formel (IIa)

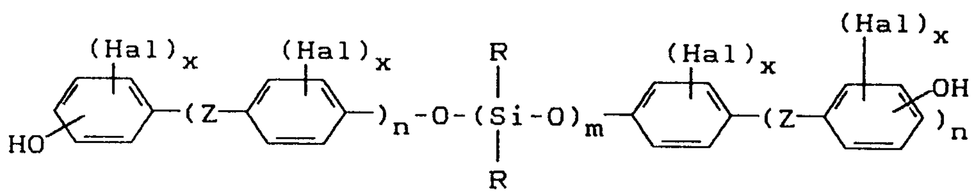
(IIa)

worin Z, Hal, x und n die für Formel (II) genannte Bedeutung haben, und die Reste R gleich oder verschieden sind und lineares $C_1$-$C_{20}$-Alkyl, verzweigtes $C_3$-$C_{20}$- Alkyl, $C_6$-$C_{20}$-Aryl bedeuten und m eine ganze Zahl von 5 bis 100 ist, und die Polycarbonate A Homopolycarbonate oder Copolycarbonatemit mittleren Gewichtsmittelmolekulargewichten von 10.000 bis 200.000 sind, wobei die Diphenole der Formel (IIa) nur für die Herstellung von Copolycarbonaten mit den Diphenolen der Formel (II) eingesetzt werden, und ihr Gewichtsanteil in den Copolycarbonaten 1 bis 20 Gew.-% ist, bezogen jeweils auf Gesamtgewicht der Diphenole der Formeln (II) und (IIa),
B.
0 bis 50 Gew.-Teile eines Pfropfpolymerisats aus
B.1
5 bis 90 Gew.-Teilen einer Mischung aus
B.1.1
50 bis 95 Gew.-% Styrol, α-Methylstyrol, kernsubstituiertem Styrol, Methylmethacrylat oder Mischungen daraus, und
B.1.2
50 bis 5 Gew.-% (Meth)Acrylnitril, Methylmethacrylat, Maleinsäureanhydrid, N-substituiertem Maleinimid oder Mischungen daraus, auf
B.2
95 bis 10 Gew.-Teile eines Kautschuks mit einer Glastemperatur $T_G \leq 10\,°C$,
C.
5 bis 70 Gew.-Teile eines thermoplastischen Copolymerisats aus
C.1
50 bis 95 Gew.-% Styrol, α-Methylstyrol, kernsubstituiertem Styrol, Methylmethacrylat oder Mischungen daraus, und
C.2

50 bis 5 Gew.-% (Meth)Acrylnitril, Methylmethacrylat, Maleinsäureanhydrid, N-substituiertem Maleinimid oder Mischungen daraus,

D.

0 bis 15 Gew.-Teile einer niedermolekularen oder hochmolekularen Bromverbindung, bezogen auf jeweils 100 Gew.-Teile aus A. + C. + D. und gegebenenfalls B., wobei der Halogengehalt, resultierend aus den Komponenten A. + D., zwischen 3 und 10 Gew.-%, bezogen auf das Gesamtgewicht der Komponenten A. und D., beträgt,

E.

1 bis 20 Gew.-Teile, bezogen auf 100 Gew.-Teile A. + C. und gegebenenfalls B. und/oder D., einer Phosphorverbindung der Formel (I)

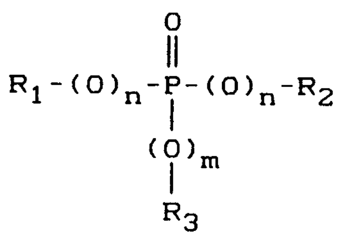

(I)

worin

$R_1$, $R_2$ und $R_3$ unabhängig voneinander $C_1$-$C_8$-Alkyl oder $C_6$-$C_{20}$-Aryl sind und

n und m unabhängig voneinander für 0 oder 1 stehen,

F.

0,05 bis 1,0 Gew.-Teile bezogen auf 100 Gew.-Teile A. + C. und gegebenenfalls B. und/oder D., eines Tetrafluorethylenpolymerisats mit mittleren Teilchengrößen von 0,05 bis 1000 $\mu$m, einer Dichte von 1,2 bis 2,3 g/cm$^3$ und mit Fluorgehalten von 65 bis 76 Gew.-% und

G.

0,2 bis 5,0 Gew.-Teile bezogen auf 100 Gew.-Teile der Summe aus A. bis G., eines Polyalkylenethers, der mit 5 bis 0,05 Gew.-% (bezogen auf die Menge an Polyalkylenether) eines Radikalbildner modifiziert ist, der bei Temperaturen zwischen 20 und 200 °C ausreichend schnell in Radikale zerfällt, wobei die zu modifizierenden Polyalkylenether Reaktionsprodukte aus Polyolen und einem oder mehreren Athylenoxiden sind, und Molekulargewichte zwischen 500 und 15.000 besitzen, wobei man die Komponenten A, C, E, F, G und gegebenenfalls B und/oder D vermischt und danach bei Temperaturen von 200 bis 330 °C schmelzcompoundiert oder schmelzextrudiert.

**2.** Verfahren gemäß Anspruch 1, dadurch gekennzeichnet, daß die Komponente F. in Form einer koagulierten Mischung von Emulsionen der Tetrafluorethylenpolymerisate F. einer mittleren Teilchengröße von 0,05 bis20 $\mu$m und einer Dichte von 1,2 bis 1,9 g/cm$^3$ mit Emulsionen von Pfropfpolymerisaten B, eingesetzt wird, das Gewichtsverhältnis Pfropfpolymerisat B. zum Tetrafluorethylenpolymerisat F. zwischen 95:5 und 60:40 liegt.

**3.** Verfahren gemäß Anspruch 1, dadurch gekennzeichnet, daß das Tetrafluorethylenpolymerisat gemäß Komponente F. mittlere Teilchengrößen von 100 bis 1000 Um und eine Dichte von 2,0 bis 2,3 g/cm$^3$ hat.

**4.** Verfahren gemäß Ansprüche 1 bis 3, dadurch gekennzeichnet, daß die Komponente G. in Mengen von 1,0 bis 3,0 Gew,-Teilen eingesetzt wird,

**5.** Verfahren gemäß Ansprüche 1 bis 4, dadurch gekennzeichnet, daß die Komponente B. aus 30 bis 80 Gew.-Teilen B.1 und 70 bis 20 Gew,-Teilen B.2 zusammengesetzt ist.

**6.** Verfahren gemäß Ansprüche 1 bis 5, dadurch gekennzeichnet, daß die Komponente E, in Mengen von 2 bis 15 Gew,-Teilen eingesetzt wird.

**7.** Verfahren gemäß Ansprüche 1 bis 6, dadurch gekennzeichnet, daß die Komponente F. in Mengen von 0,1 bis 0,5 Gew,-Teilen eingesetzt wird.

**8.** Verfahren gemäß Ansprüche 1 bis 7, bestehend aus den Komponenten A., C., E., F., G. und gegebenenfalls B. und/oder D. und zusätzlich mindestens einem Zusatz, ausgewählt aus der Gruppe der Stabilisatoren, Pigmente, Fließmittel und Entformungsmittel.

## Claims

**Claims for the following Contracting States : DE, FR, GB, IT, NL**

**1.** Thermoplastic moulding compounds containing

A.

20 to 90 parts by weight of a thermoplastic aromatic polycarbonate based on diphenols corresponding to formula (II)

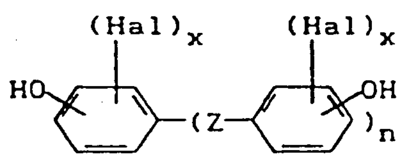

(II),

in which Z in a single bond, a $C_{1-5}$ alkylene radical, a $C_{2-5}$ alkylidene radical, a $C_{5-6}$ cycloalkylidene radical, -S- or $-SO_2-$, Hal is chlorine or bromine, x = 0, 1 or 2 and n = 1 or 0,
and optionally to formula (IIa)

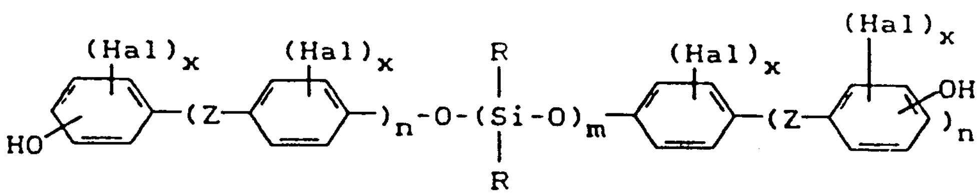

(IIa)

in which Z, Hal, x and n are as defined for formula (II) and the substituents R may be the same or different and represent linear $C_{1-20}$ alkyl, branched $C_{3-20}$ alkyl, $C_{6-20}$ aryl and m is an integer of 5 to 100,
and the polycarbonates A are homopolycarbonates or copolycarbonates having weight average molecular weights of 10,000 to 200,000, the diphenols corresponding to formula (IIa) only being used for the production of copolycarbonates with the diphenols corresponding to formula (II) and their percentage by weight in the copolycarbonates being from 1 to 20% by weight, based on the total weight of the diphenols corresponding to formulae (II) and (IIa),

B.

0 to 50 parts by weight of a graft polymer of

B.1

5 to 90 parts by weight of a mixture of

B.1.1

50 to 90% by weight styrene, α-methyl styrene, nucleus-substituted styrene, methyl methacrylate or mixtures thereof and

B.1.2

50 to 50% by weight (meth)acrylonitrile, methyl methacrylate, maleic anhydride, N-substituted maleic imide or mixtures thereof on

B.2

95 to 10 parts by weight of a rubber having a glass temperature $T_G$ of ≦ 10 ° C,

C.

5 to 70 parts by weight of a thermoplastic copolymer of

C.1

50 to 95% by weight styrene, α-methyl styrene, nucleus-substituted styrene, methyl methacrylate

or mixtures thereof and

C.2

50 to 5% by weight (meth)acrylonitrile, methyl methacrylate, maleic anhydride, N-substituted maleic imide or mixtures thereof,

D.

0 to 15 parts by weight of a low molecular weight or high molecular weight bromine compound, based on 100 parts by weight of A. + C. + D. and optionally B., the halogen content resulting from components A. + D. being between 3 and 10% by weight, based on the total weight of components A. and D.,

E.

1 to 20 parts by weight, based on 100 parts by weight A. + C. and optionally B. and/or D., of a phosphorus compound corresponding to formula (I)

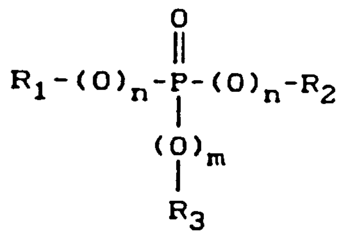

(I)

in which

$R_1$, $R_2$ and $R_3$ independently of one another represent $C_{1-8}$ alkyl or $C_{6-20}$ aryl and

n and m independently of one another stand for 0 or 1,

F.

0.05 to 1.0 part by weight, based on 100 parts by weight A. + C. and optionally B. and/or D., of a tetrafluoroethylene polymer having average particle sizes of 0.05 to 1,000 µm, a density of 1.2 to 2.3 g/cm$^3$ and fluorine contents of 65 to 76% by weight and

G.

0.2 to 5.0 parts by weight, based on 100 parts by weight of the sum of A. to G., of a polyalkylene ether modified with 5 to 0.05% by weight (based on the quantity of polyalkylene ether) of a radical former which breaks down into radicals sufficiently quickly at temperatures of 20 to 200 °C, the polyalkylene ethers to be modified being reaction products of polyols and one or more alkylene oxides and having molecular weights of 500 to 15,000.

**2.** Moulding compounds as claimed in claim 1, characterized in that component F. is used in the form of a coagulated mixture of emulsions of the tetrafluoroethylene polymers F. having an average particle size of 0.05 to 20 µm and a density of 1.2 to 1.9 g/cm$^3$ with emulsions of graft polymers B., the ratio by weight of graft polymer B. to the tetrafluoroethylene polymer F. being between 95:5 and 60:40.

**3.** Moulding compounds as claimed in claim 1, characterized in that the tetrafluoroethylene polymer of component F. has average particle sizes of 100 to 1,000 µm and a density of 2.0 to 2.3 g/cm$^3$.

**4.** Moulding compounds as claimed in claims 1 to 3, characterized in that component G. is used in quantities of 1.0 to 3.0 parts by weight.

**5.** Moulding compounds as claimed in claims 1 to 4, characterized in that component B. consists of 30 to 80 parts by weight B.1 and 70 to 20 parts by weight B.2.

**6.** Moulding compounds as claimed in claims 1 to 5, characterized in that component E. is used in quantities of 2 to 15 parts by weight.

**7.** Moulding compounds as claimed in claims 1 to 6, characterized in that component F. is used in quantities of 0.1 to 0.5 part by weight.

**8.** Moulding compounds as claimed in claims 1 to 7 consisting of components A., C., E., F., G., and

optionally B. and/or D. and at least one additive selected from the group consisting of stabilizers, pigments, flow aids and mould release agents.

**9.** A process for the production of the moulding compounds claimed in claims 1 to 7, characterized in that components A., C., E., F., G., and optionally B. and/or D. are mixed in known manner and the resulting mixture is melt-compounded or melt-extruded in standard units at temperatures of 200 to 330 °C.

**10.** A process as claimed in claim 9 for the production of the moulding compounds claimed in claim 8, characterized in that at least one additive selected from the group consisting of stabilizers, pigments, flow aids and mould release agents is incorporated.

**Claims for the following Contracting State : ES**

**1.** A process for the production of thermoplastic moulding compounds containing

A.

20 to 90 parts by weight of a thermoplastic aromatic polycarbonate based on diphenols corresponding to formula (II)

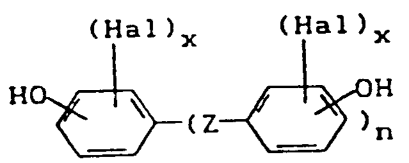

(II),

in which Z in a single bond, a $C_{1-5}$ alkylene radical, a $C_{2-5}$ alkylidene radical, a $C_{5-6}$ cycloalkylidene radical, -S- or $-SO_2-$, Hal is chlorine or bromine, x = 0, 1 or 2 and n = 1 or 0, and optionally to formula (IIa)

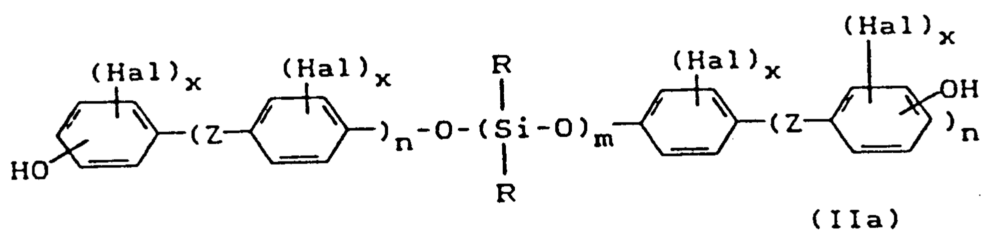

(IIa)

in which Z, Hal, x and n are as defined for formula (II) and the substituents R may be the same or different and represent linear $C_{1-20}$ alkyl, branched $C_{3-20}$ alkyl, $C_{6-20}$ aryl and m is an integer of 5 to 100,

and the polycarbonates A are homopolycarbonates or copolycarbonates having weight average molecular weights of 10,000 to 200,000, the diphenols corresponding to formula (IIa) only being used for the production of copolycarbonates with the diphenols corresponding to formula (II) and their percentage by weight in the copolycarbonates being from 1 to 20% by weight, based on the total weight of the diphenols corresponding to formulae (II) and (IIa),

B.

0 to 50 parts by weight of a graft polymer of

B.1

5 to 90 parts by weight of a mixture of

B.1.1

50 to 95% by weight styrene, α-methyl styrene, nucleus-substituted styrene, methyl methacrylate or mixtures thereof and

B.1.2

50 to 5% by weight (meth)acrylonitrile, methyl methacrylate, maleic anhydride, N-substituted maleic imide or mixtures thereof on

B.2
95 to 10 parts by weight of a rubber having a glass temperature $T_G$ of ≦ 10 °C,

C.
5 to 70 parts by weight of a thermoplastic copolymer of

C.1
50 to 95% by weight styrene, α-methyl styrene, nucleus-substituted styrene, methyl methacrylate or mixtures thereof and

C.2
50 to 5% by weight (meth)acrylonitrile, methyl methacrylate, maleic anhydride, N-substituted maleic imide or mixtures thereof,

D.
0 to 15 parts by weight of a low molecular weight or high molecular weight bromine compound, based on 100 parts by weight of A. + C. + D. and optionally B., the halogen content resulting from components A. + D. being between 3 and 10% by weight, based on the total weight of components A. and D.,

E.
1 to 20 parts by weight, based on 100 parts by weight A. + C. and optionally B. and/or D., of a phosphorus compound corresponding to formula (I)

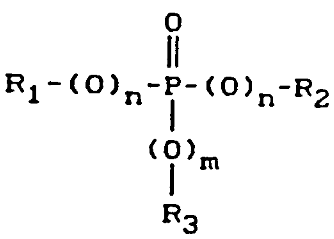

(I)

in which
$R_1$, $R_2$ and $R_3$ independently of one another represent $C_{1-8}$ alkyl or $C_{6-20}$ aryl and
n and m independently of one another stand for 0 or 1,

F.
0.05 to 1.0 part by weight, based on 100 parts by weight A. + C. and optionally B. and/or D., of a tetrafluoroethylene polymer having average particle sizes of 0.05 to 1,000 µm, a density of 1.2 to 2.3 g/cm$^3$ and fluorine contents of 65 to 76% by weight and

G.
0.2 to 5.0 parts by weight, based on 100 parts by weight of the sum of A. to G., of a polyalkylene ether modified with 5 to 0.05% by weight (based on the quantity of polyalkylene ether) of a radical former which breaks down into radicals sufficiently quickly at temperatures of 20 to 200 °C, the polyalkylene ethers to be modified being reaction products of polyols and one or more alkylene oxides and having molecular weights of 500 to 15,000,

in which components A., C., E., F., G., and optionally B. and/or D. are mixed in known manner and the resulting mixture is melt-compounded or melt-extruded in standard units at temperatures of 200 to 330 °C.

**2.** A process as claimed in claim 1, characterized in that component F. is used in the form of a coagulated mixture of emulsions of the tetrafluoroethylene polymers F. having an average particle size of 0.05 to 20 µm and a density of 1.2 to 1.9 g/cm$^3$ with emulsions of graft polymers B., the ratio by weight of graft polymer B. to the tetrafluoroethylene polymer F. being between 95:5 and 60:40.

**3.** A process as claimed in claim 1, characterized in that the tetrafluoroethylene polymer of component F. has average particle sizes of 100 to 1,000 µm and a density of 2.0 to 2.3 g/cm$^3$.

**4.** A process as claimed in claims 1 to 3, characterized in that component G. is used in quantities of 1.0 to 3.0 parts by weight.

**5.** A process as claimed in claims 1 to 4, characterized in that component B. consists of 30 to 80 parts by

weight B.1 and 70 to 20 parts by weight B.2.

**6.** A process as claimed in claims 1 to 5, characterized in that component E. is used in quantities of 2 to 15 parts by weight.

**7.** A process as claimed in claims 1 to 6, characterized in that component F. is used in quantities of 0.1 to 0.5 part by weight.

**8.** A process as claimed in claims 1 to 7 consisting of components A., C., E., F., G., and optionally B. and/or D. and at least one additive selected from the group consisting of stabilizers, pigments, flow aids and mould release agents.

**Revendications**

**Revendications pour les Etats contractants suivants : DE, FR, GB, IT, NL**

**1.** Matières à mouler thermoplastiques contenant

A.

20 à 90 parties en poids d'un polycarbonate aromatique thermoplastique à base de diphénols de formule II

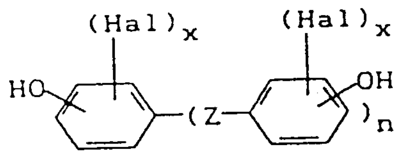

(II),

dans laquelle Z représente une liaison simple, un groupe alkylène en $C_1$-$C_5$ alkylidène en $C_2$-$C_5$ cycloalkylidène en $C_5$-$C_6$, -S- ou -$SO_2$-, Hal représente le chlore ou le brome, x est égal à 0, 1 ou 2 et n à 1 ou 0,

et le cas échéant de formule IIa

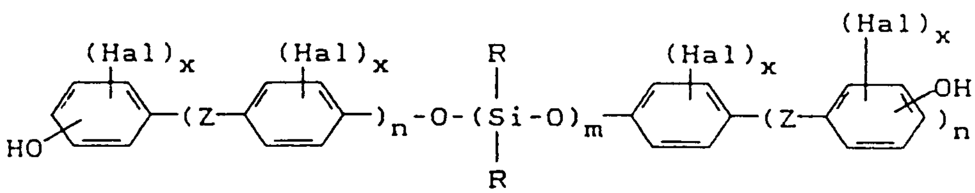

(IIa)

dans laquelle Z, Hal, x et n ont les significations indiquées en référence à la formule II et les symboles R, ayant des significations identiques ou différentes, représentant chacun un groupe alkyle linéaire en $C_1$-$C_{20}$, alkyle ramifiée en $C_3$-$C_{20}$, aryle en $C_6$-$C_{20}$, et m est un nombre entier allant de 5 à 100,

et les polycarbonates A. sont des homopolycarbonates ou des copolycarbonates de poids moléculaire moyen, moyenne en poids, 10 000 à 200 000, les diphénols de formule IIa n'étant utilisés pour la préparation des copolycarbonates qu'avec les diphénols de formule II, et leur proportion en poids dans les copolycarbonates allant de 1 à 20 % du poids total des diphénols de formule II et IIa,

B.

0 à 50 parties en poids d'un polymère greffé de :

B.1

5 à 90 parties en poids d'un mélange de :

B.1.1

50 à 95 % en poids de styrène, d'α-méthylstyrène, d'un styrène substitué dans le noyau, de méthacrylate de méthyle ou d'un mélange de tels monomères, et

B.1.2

50 à 5% en poids de (méth)acrylonitrile, de méthacrylate de méthyle, d'anhydride maléique, d'un maléimide substitué à l'azote ou d'un mélange de tels monomères, sur

B.2

95 à 10 parties en poids d'un caoutchouc ayant une température vitreuse $T_G$ inférieure ou égale à 10 ° C,

C.

5 à 70 parties en poids d'un copolymère thermoplastique de :

C.1

50 à 95 % en poids de styrène, d'α-méthylstyrène, d'un styrène substitué dans le noyau, de méthacrylate de méthyle ou d'un mélange de tels monomères, et

C.2

50 à 5 % en poids de (méth)acrylonitrile, de méthacrylate de méthyle, d'anhydride maléique, d'un maléimide substitué à l'azote ou d'un mélange de tels monomères,

D.

0 à 15 parties en poids d'un dérivé bromé à bas poids moléculaire ou à haut poids moléculaire, pour 100 parties en poids dans chaque cas de A. + C. + D. et le cas échéant B., la teneur en halogène provenant des composants A. + D. représentant de 3 à 10 % du poids total des composants A. et D.,

E.

1 à 20 parties en poids, pour 100 parties en poids de A. + C. et le cas échéant B. et/ou D., d'un dérivé du phosphore de formule I

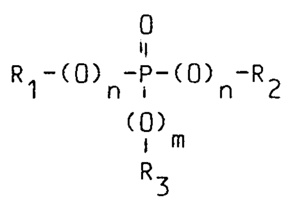

(I)

dans laquelle

$R_1$, $R_2$ et $R_3$ représentent chacun, indépendamment les uns des autres, un groupe alkyle en $C_1$-$C_8$ ou aryle en $C_6$-$C_{20}$, et

n et m sont égaux chacun, indépendamment l'un de l'autre, à 0 ou 1,

F.

0,05 à 1,0 partie en poids pour 100 parties en poids de A. + C. et le cas échéant 8. et/ou D., d'un polymère de tétrafluoréthylène à une dimension de particule moyenne de 0,05 à 1 000 µm, une densité de 1,2 à 2,3 g/cm$^3$ et une teneur en fluor de 65 à 76 % en poids, et

G.

0,2 à 5,0 parties en poids, pour 100 parties en poids de la somme de A. à G., d'un éther de polyalkylène modifié par 5 à 0,05 % de son poids d'un inducteur radicalaire qui se décompose suffisamment rapidement en radicaux libres à des températures de 20 à 200 ° C, les éthers de polalkylène, avant modification, étant des produits de réaction de polyols et d'un ou plusieurs oxydes d'alkylène ayant des poids moléculaires de 500 à 15 000.

**2.** Matières à mouler selon la revendication 1, caractérisées en ce que le composant F. est mis en oeuvre à l'état de mélange coagulé d'une émulsion du polymère du tétrafluoréthylène F. à une dimension de particule moyenne de 0,05 à 20 µm, une densité de 1,2 à 1,9 g/cm$^3$, avec une émulsion du polymère greffé B., les proportions relatives en poids entre le polymère greffé B. et le polymère du tétrafluoréthylène F. allant de 95:5 à 60:40.

**3.** Matières à mouler selon la revendication 1, caractérisées en ce que le polymère de tétrafluoréthylène du composant F. est à une dimension de particule moyenne de 100 à 1 000 µm et à une densité de 2,0 à 2,3 g/cm$^3$.

**4.** Matières à mouler selon les revendications 1 à 3, caractérisées en ce que le composant G. est mis en oeuvre en quantité de 1,0 à 3,0 parties en poids.

**5.** Matières à mouler selon les revendications 1 à 4, caractérisées en ce que le composant B. est constitué de 30 à 80 parties en poids de 8.1 et 70 à 20 parties en poids de B.2.

**6.** Matières à mouler selon les revendications 1 à 5, caractérisées en ce que le composant E. est mis en oeuvre en quantité de 2 à 15 parties en poids.

**7.** Matières à mouler selon les revendications 1 à 6, caractérisées en ce que le composant F. est mis en oeuvre en quantité de 0,1 à 0,5 partie en poids.

**8.** Matières à mouler selon les revendications 1 à 7, consistant en les composants A., C., E., F., G. et éventuellement B. et/ou D., et en outre en au moins un additif choisi dans le groupe formé par les stabilisants, les pigments, les agents fluidifiants et les agents de démoulage.

**9.** Procédé de préparation des matières à mouler selon les revendications 1 à 7, caractérisé en ce que l'on mélange de manière connue les composants A., C., E., F., G. et éventuellement B. et/ou D. et on poursuit par un mélange à l'état fondu ou une extrusion à l'état fondu sur des appareils usuels à des températures de 200 à 330 ° C.

**10.** Procédé de préparation des matières à mouler de la revendication 8 selon revendication 9, caractérisé en ce que l'on utilise au moins un additif choisi dans le groupe formé par les stablilisants, les pigments, les agents fluidifiants et les agents de démoulage.

**Revendications pour l'Etat contractant suivant : ES**

**1.** Procédé de préparation de matières à mouler thermoplastiques contenant

A.

20 à 90 parties en poids d'un polycarbonate aromatique thermoplastique à base de diphénols de formule II

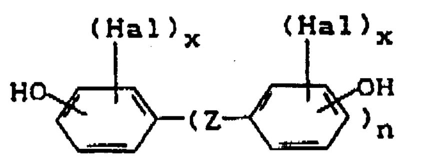

(II),

dans laquelle Z représente une liaison simple, un groupe alkylène en $C_1$-$C_5$, alkylidène en $C_2$–$C_5$, cycloalkylidène en $C_5$-$C_6$, -S- ou -$SO_2$-, Hal représente le chlore ou le brome, x est égal à 0, 1 ou 2 et n à 1 ou 0,

et le cas échéant de formule IIa

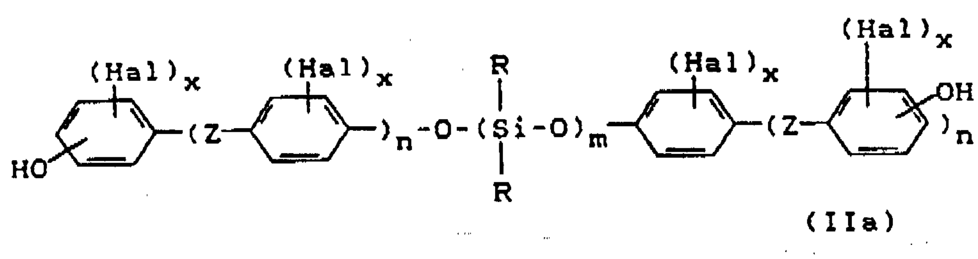

(IIa)

dans laquelle Z, Hal, x et n ont les significations indiquées en référence à la formule II et les symboles R, ayant des significations identiques ou différentes, représentant chacun un groupe alkyle linéaire en $C_1$-$C_{20}$, alkyle ramifiée en $C_3$-$C_{20}$, aryle en $C_6$-$C_{20}$, et m est un nombre entier allant de 5 à 100,

et les polycarbonates A. sont des homopolycarbonates ou des copolycarbonates de poids moléculaire moyen, moyenne en poids, 10 000 à 200 000, les diphénols de formule IIa n'étant utilisés pour la préparation des copolycarbonates qu'avec les diphénols de formule II, et leur proportion en poids

dans les copolycarbonates allant de 1 à 20%: du poids total des diphénols de formule II et IIa,

B.

0 à 50 parties en poids d'un polymère greffé de :

B.1

5 à 90 parties en poids d'un mélange de :

B.1.1

50 à 95 % en poids de styrène, d'α-méthylstyrène, d'un styrène substitué dans le noyau, de méthacrylate de méthyle ou d'un mélange de tels monomères, et

B.1.2

50 à 5 % en poids de (méth)acrylonitrile, de méthacrylate de méthyle, d'anhydride maléique, d'un maléimide substitué à l'azote ou d'un mélange de tels monomères, sur

B.2

95 à 10 parties en poids d'un caoutchouc ayant une température vitreuse $T_G$ inférieure ou égale à 10°C,

C.

5 à 70 parties en poids d'un copolymère thermoplastique de :

C.1

50 à 95 % en poids de styrène d'α-méthylstyrène, d'un styrène substitué dans le noyau, de méthacrylate de méthyle ou d'un mélange de tels monomères, et

C.2

50 à 5 % en poids de (méth)acrylonitrile, de méthacrylate de méthyle, d'anhydride maléique, d'un maléimide substitué à l'azote ou d'un mélange de tels monomères,

D.

0 à 15 parties en poids d'un dérivé bromé à bas poids moléculaire ou à haut poids moléculaire, pour 100 parties en poids de A. + C. + D. et le cas échéant B., la teneur en halogène provenant des composants A. + D. représentant de 3 à 10 % du poids total des composants A. et D.,

E.

1 à 20 parties en poids, pour 100 parties en poids de A. + C. et le cas échéant B. et/ou D., d'un dérivé du phosphore de formule I

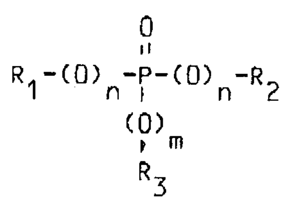

(I)

dans laquelle

$R_1$, $R_2$ et $R_3$ représentent chacun, indépendamment les uns des autres, un groupe alkyle en $C_1$-$C_8$ ou aryle en $C_6$-$C_{20}$, et

n et m représentent chacun, indépendamment l'un de l'autre, 0 ou 1,

F.

0,05 à 1,0 partie en poids pour 100 parties en poids de A. + C. et le cas échéant B. et/ou D., d'un polymère de tétrafluoréthylène à des dimensions de particules moyennes de 0,05 à 1 000 µm, une densité de 1,2 à 2,3 g/cm$^3$ et des teneurs en fluor de 65 à 76 % en poids, et

G.

0,2 à 5,0 parties en poids, pour 100 parties en poids de la somme de A. à G., d'un éther de polyalkylène modifié par 5 à 0,05 % de son poids d'un inducteur radicalaire qui se décompose suffisamment rapidement en radicaux libres à des températures de 20 à 200°C, les éthers de polalkylène, avant modification, étant des produits de réaction de polyols et d'un ou plusieurs oxydes d'alkylène ayant des poids moléculaires de 500 à 15 000, selon lequel on mélange les composants A., C., E., F., G. et le cas échéant a. et/ou D. puis on poursuit par un mélange à l'état fondu ou une extrusion à l'état fondu à des températures de 200 à 33°C.

**2.** Procédé selon la revendication 1, caractérisées en ce que le composant F. est mis en oeuvre à l'état de mélange coagulé d'une émulsion du polymère du tétrafluoréthylène F. à une dimension de particule moyenne de 0,05 à 20 µm, et une densité de 1,2 à 1,9 g/cm , avec une émulsion du polymère greffé

B., les proportions relatives en poids entre le polymère greffé B. et le polymère du tétrafluoréthylène F. allant de 95:5 à 60:40.

**3.** Procédé selon la revendication 1, caractérisé en ce que le polymère du tétrafluoréthylène du composant F. a une dimension de particule moyenne de 100 a 1 000 µm et à une densité de 2,0 à 2,3 g/$cm^3$.

**4.** Procédé selon les revendications 1 à 3, caractérisé en ce que le composant G. est mis en oeuvre en quantité de 1,0 à 3,0 parties en poids.

**5.** Procédé selon les revendications 1 à 4, caractérisé en ce que Le conposant a. est constitué de 30 à 80 parties en poids de B.1 et 70 à 20 parties en poids de B.2.

**6.** Procédé selon les revendications 1 à 5, caractérisé en ce que le composant E. est mis en oeuvre en quantité de 2 à 15 parties en poids.

**7.** Procédé selon les revendications 1 à 6, caractérisé en ce que le composant F. est mis en oeuvre en quantité de 0,1 à 0,5 partie en poids.

**8.** Procédé selon les revendications 1 à 7, dans lequel la matière consiste en les composants A., C., E., F., G. et le cas échéant B. et/ou D., et en outre au moins un additif choisi dans le groupe formé par les stabilisants, les pigments, les agents fluidifiants et les agents de démoulage.